**Europäisches Patentamt**

**European Patent Office**

**Office européen des brevets**

(11) Veröffentlichungsnummer: **0 441 124 A1**

# EUROPÄISCHE PATENTANMELDUNG

(21) Anmeldenummer: **91100254.1**

(51) Int. Cl.5: **A22C 21/00**

(22) Anmeldetag: **10.01.91**

Ein Antrag gemäss Regel 88 EPÜ auf Streichung des Anspruchs 2 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **09.02.90 DE 4003859**

(43) Veröffentlichungstag der Anmeldung:
**14.08.91 Patentblatt 91/33**

(84) Benannte Vertragsstaaten:
**AT BE CH DE DK ES FR GB IT LI LU NL SE**

(71) Anmelder: **NORDISCHER MASCHINENBAU RUD. BAADER GMBH + CO KG**
**Geniner Strasse 249**
**W-2400 Lübeck(DE)**

(72) Erfinder: **Berliner, Ralph**
**Dissauer Strasse 30**
**W-2400 Lübeck 1(DE)**
Erfinder: **Diesing, Karl-Heinz**
**Heimstätten 21**
**W-2400 Lübeck(DE)**
Erfinder: **Groth, Peter**
**Berkenbusch 18**
**W-2418 Ratzeburg(DE)**
Erfinder: **Wagner, Wolfgang**
**Sonnentauweg 21**
**W-2067 Reinfeld(DE)**

(54) **Verfahren zum Enthäuten von Geflügelkörpern und Vorrichtung zur Durchführung des Verfahrens.**

(57) Es wird ein Verfahren und eine Vorrichtung zum Enthäuten von Geflügelkörpern beschrieben, die als "Front-half" prepariert sind, und von denen die Flügel entfernt sind. Zum Zwecke der Gewinnung der Haut in einem Stück wird zunächst die im Bereich des Rückens aufliegende Hautpartie von dem Muskelfleisch gelöst und in diesem Bereich aufgetrennt und erfolgt anschließend das Enthäuten in bekannter Weise. Dazu besteht die Vorrichtung aus einem ersten Werkzeug (6) mit Spreizfingern (7), die vom Halsteil her zwischen Hals und Haut eindringen und letztere abheben. Durch Spreizen der Spreizfinger wird die Haut dann auch von der übrigen Rückenpartie abgehoben und schließlich zum Reißen im Bereich des Rückgrats gebracht. Die Haut ist dann durch einen nachgeschalteten Enthäuter (18) bekannter Bauart vollständig und in einem Stück entfernbar.

## VERFAHREN ZUM ENTHÄUTEN VON GEFLÜGELKÖRPERN UND VORRICHTUNG ZUR DURCHFÜHRUNG DES VERFAHRENS

Die Erfindung betrifft ein Verfahren zum Enthäuten von Geflügelkörpern, bei denen die Extremitäten entfernt sind und eine Vorrichtung zur Durchführung des Verfahrens, mit einem Förderer, der mit mindestens einem, ein Sattelhorn aufweisenden Stützsattel bestückt ist zum Fixieren des zu bearbeitenden Geflügelkörpers und zum Führen desselben mit dem Kopfende voraus durch den Wirkungsbereich von Werkzeugen , die symmetrisch zu der Mittenebene des Förderers und längs dessen Förderweg angeordnet sind.

Das Enthäuten von Geflügelkörpern spielt insbesondere als vorbereitender Arbeitsgang, beispielsweise bei der Gewinnung des Brustfleisches in Form von Filets eine Rolle.

Für diesen Arbeitsgang geeignete Einrichtungen sind bekannt, wobei diese sowohl in halbautomatischem Einsatz als auch integriert in z. B. Brustfleisch-Filetiermaschinen Verwendung finden.

Gemeinsames Merkmal dieser bekannten Enthäuteeinrichtungen ist ein Paar gegensinnig angetriebener, verzahnter Walzen, die einander unter Belassen eines engen Spaltes gegenüberstehen.

So zeigt die NL-OS 83 02 207 eine Einrichtung, bei der ein Paar zylindrischer Walzen unterschiedlicher Durchmesser vorgesehen ist. Diese Einrichtung ist in eine Brustfleisch-Filetiermaschine integrierbar.

Die Einrichtung nach der DE-PS 37 36 401 verwendet ein Paar kegelförmiger Walzen, die in eine Brustfleisch-Filetiermaschine integriert sind und in der Lage sind, die Haut von Bruststücken zu entfernen, d. h. von einem Körperabschnitt, der lediglich die Brustpartie mit den Körpergelenken der Flügel umfaßt, die jedoch entfernt sind.

Schließlich werden bei der Einrichtung nach der EP-A1-244 887 zwei hintereinander angeordnete Paare von zylindrischen Walzen eingesetzt. Dabei sind diese unterhalb einer, die Geflügelkörper an ihren Beinen haltenden Hänge-Fördereinrichtung installiert. Vor dieser Enthäuteeinrichtung ist ein Mechanismus zum partiellen Lösen der Haut im Brustbereich vorgesehen. Dieser besteht aus einem Paar in die Beuge unterhalb der Schenkel in die Haut eindringender und sich zwischen Haut und Muskelfleisch zum Kopfende des Geflügelkörpers vorschiebender Trennelemente. Diese haben die Aufgabe, die Haut im Brustbereich vorzulösen, wobei Trennmesser dafür sorgen, daß die Hautpartie im Brustbereich von den übrigen Hautpartien getrennt wird. Die nachgeschalteten Enthäutewalzen erfassen lediglich die den Brustbereich abdeckende Hautpartie, die mit dem Muskelfleisch stark verwachsene Rückenhaut kann mit dieser Einrichtung nicht entfernt werden.

Die vorliegende Erfindung hat sich zum Ziel gesetzt, sogenannte Front-halfs, - das ist ein Geflügelkörper-Abschnitt ohne Flügel, der durch Quertrennen eines Geflügelkörpers entsteht, wobei die Schnittebene so gelegt ist, daß sie zwischen den unteren und den oberen Extremitäten und das Rückgrat quer trennend verläuft -, vollständig zu enthäuten. Dabei soll die Haut in einem Stück gewonnen werden, um ihre Weiterverwendung z. B. als natürliche, röstfähige Verpackungshülle, beispielsweise im Fast-food-Bereich zu ermöglichen.

Die damit in Verbindung stehende Aufgabe wird erfindungsgemäß durch ein Verfahren gelöst, das dadurch gekennzeichnet ist, daß zunächst die im Bereich des Rückens aufliegende Hautpartie der Hauthülle durch Unterfahren vom Kopfende her und im wesentlichen im Bereich der Symmetrieebene des Geflügelkörpers abgehoben wird, daß dann die Hauthülle durch Spannen und Überdehnen der so gelösten Hautpartie aufgetrennt wird und schließlich das Enthäuten in bekannter Weise durch Angriff von der Brustseite her erfolgt.

Der Vorteil dieses Verfahrens besteht darin, daß das Vorlösen der Haut in dem Bereich, in dem sie mit dem Muskelfleisch stark verwachsen ist, sowie das gezielte Auftrennen der Hauthülle in diesem Bereich, ermöglicht, durch übliches Enthäuten von der Brustseite her die Haut ohne Beschädigung in einem Stück abzuheben.

Eine für die Durchführung dieses Verfahrens geeignete Vorrichtung kann derart ausgestaltet sein, daß das erste Werkzeug ein Paar Spreizfinger mit gegen die Bewegungsrichtung des Förderers gerichteten, an ihrem freien Enden verrundeten Spitzen umfaßt, die Spreizfinger in Grundstellung mit ihren Spitzen unmittelbar neben der Mittenebene des Förderers und unterhalb des Sattelhorns angeordnet und pflugartig divergierend und, bezogen auf die Bahnebene des Förderers, mit dessen Bewegungsrichtung ansteigend ausgebildet sind, und die Anordnung der Spreizfinger so getroffen ist, daß sie mit ihren Spitzen der Kontur des Stützsattels bzw. der Rückenkontur des aufgesattelten Geflügelkörpers folgend steuerbar sind.

Weitere vorteilhafte Ausführungsmerkmale sind den Vorrichtungs-Unteransprüchen zu entnehmen.

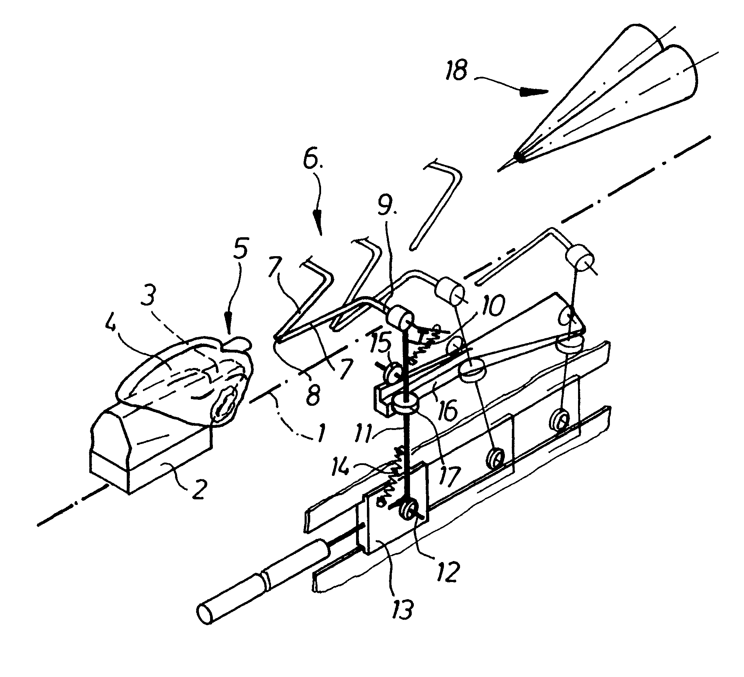

Die erfindungsgemäße Vorrichtung wird nachstehend anhand eines in der Zeichnung dargestellten Ausführungsbeispiels näher erläutert.

Die einzige Figur zeigt eine axonometrische Darstellung der Vorrichtung mit einem aufgesattelten, als Front-half preparierten Geflügelkörper gegen die Förderrrichtung betrachtet.

Die erfindungsgemäße Vorrichtung zum Enthäuten ist auf einem nicht gezeigten Gestell aufgebaut, in welchem ein nur angedeutet gezeigter endloser Förderer 1 , beispielsweise aus einer Kette, in geeigneter Weise angetrieben umläuft. Der Förderer 1 ist mit Halterungen in Form von Stützsätteln 2 bestückt, deren jeder ein Sattelhorn 3 aufweist und zur Aufnahme eines Geflügelkörpers 4 vorgesehen ist, so daß dieser mit dem Halsteil 5 voraus- und dem Brustbein nach oben weisend gefördert wird. In der Bahn der Stützsättel 2 ist ein erstes Werkzeug 6 angeordnet. Es besteht aus einem Paar symmetrisch zu beiden Seiten der Umlaufebene des Förderers 1 angebrachter Spreizfinger 7 mit gegen die Bewegungsrichtung des Förderers 1 gerichteten, an ihren Enden verrundet ausgeführten Spitzen 8 . Die Spreizfinger 7 sind aus Rundstäben gebildet und so gehaltert, daß ihre Spitzen 8 in der Grundstellung einerseits unmittelbar neben der durch die Symmetrieebene der Stützsättel 2 bestimmten Umlaufebene des Förderers 1 , und andererseits unmittelbar unterhalb des Sattelshorns 3 zu liegen kommen. In Draufsicht betrachtet nehmen die Spreizfinger 7 dabei eine in Bewegungsrichtung des Förderers 1 divergierende Stellung ein. Die Spreizfinger 7 sind an ihren rückwärtigen Enden um eine jeweils quer zu der Bahn der Stützsättel 2 ausgerichtete Achse 9 gegen die Kraft einer Feder 10 schwenkbar gehaltert, so daß die Spreizfinger 7 durch das Sattelhorn 3 bzw. den dort aufgesattelten Teil des Geflügelkörpers 4 nach unten gegen Federkraft verdrängbar sind. Die Halterung jedes Spreizfingers 7 besorgt jeweils ein aufragendes Tragelement 11 , das als Lenker ausgebildet ist, an dessen oberem Ende jeweils ein Spreizfinger 7 gehaltert und dessen unteres Ende mittels eines sphärisches Lagers um eine Achse 12 schwenkbar gelagert ist, die sich quer zu der Bahn der Stützsättel 2 erstreckt und an einem Schlitten 13 befestigt ist, der parallel zu der Bahn der Stützsättel 2 bewegbar ist. Das Tragelement 11 wird mittels einer Feder 14 gegen die Bewegungsrichtung der Stützsättel 2 zurückgehalten, wobei eine an dem Tragelement 11 angebrachte erste Stützrolle 15 mit der aufragenden Kurvenbahn einer gestellfesten Steuerkurve 16 in Kontakt gehalten wird. An jedem Tragelement 11 ist weiter eine zweite Stützrolle 17 angeordnet, die jeweils durch eine die Tragelemente 11 untereinander verbindende, nicht gezeigte Feder mit einer horizontal weisenden Steuerbahn der Steuerkurve 16 in Kontakt gehalten wird.

Die Wirkungsweise der Vorrichtung wird nachstehend unter Verfolgung des Durchlaufs eines Geflügelkörpers 4 und Betrachtung jeweils einer Hälfte der jeweils paarweise angeordneten Werkzeuge beschrieben:

Der Geflügelkörper 4 wurde in geeigneter Weise auf das Sattelhorn 3 des Stützsattels 2 aufgestülpt und zwar so, daß der Brustteil nach oben und der Halsteil an der Unterseite des Sattelhorns 3 anliegend vorausweist. Der Geflügelkörper 4 wurde in dieser Stellung durch geeignete Mittel auf dem Stützsattel 2 fixiert, so daß die Bearbeitungskräfte sicher aufgenommen werden können. So vorbereitet gelangt der Geflügelkörper 4 vorbewegt durch den Förderer 1 in den Arbeitsbereich des ersten Werkzeuges 6 , dessen Spreizfinger 7 mit ihren Spitzen 8 zunächst unterhalb des Sattelhorns 3 entlang dem Hals und zwischen diesen und der die Rückenpartie des Geflügelkörpers 4 abdeckenden Haut eindringt. In diesem Augenblick wird der Schlitten 13 vorzugsweise mit der Geschwindigkeit des Stützsattels 2 vorbewegt, was bewirkt, daß sich das den Spreizfinger 7 tragende Tragelement 11 aufgrund des Verlaufs der aufragenden Kurvenbahn der Steuerkurve 16 durch die erste Stützrolle 15 geführt unter Mitnahme des Spreizfingers 7 zunehmend gegen die Bewegungsrichtung des Stützsattels 2 neigt. Infolgedessen bewegt sich die Spitze 8 des Spreizfingers 7 entlang des Rückens zwischen Haut und Rückenfleisch, wobei sie einen Weg beschreibt, der im wesentlichen der Kontur der unteren Flanke des Sattelhorns 3 folgt. Dabei tritt die Spitze 8 des Spreizfingers 7 schließlich im Bereich der Schnittebene aus, die das Front-half erzeugt hat, so daß damit die Haut über dem Rückgrat und aufgrund der Divergenz der Spreizfinger 7 über den seitlichen Rückenpartien gelöst ist. Das ist der Augenblick, in dem die erste Stützrolle 15 auf der Steuerkurve 16 in einen Bereich derselben eintritt, der das Tragelement 11 in dieser Lage verharren läßt, die Relativbewegung zwischen Stützsattel 2 und Spreizfinger 7 also gleich Null ist. Gleichzeitig läuft nun die zweite Stützrolle 17 auf der horizontalen Steuerbahn der Steuerkurve 16 auf, womit sich die Spreizfinger 7 zu spreizen beginnen. Dieser Vorgang wird fortgesetzt, bis die Hautbrücke an ihrer schwächsten Stelle über dem Rückgrat infolge der Überdehnung reißt. Das geschieht nach Spreizung um ein bestimmtes Maß. In dieser Stellung wird die Begleitbewegung des Schlittens 13 gestoppt und schließlich seine Rückstellung in die Ausgangslage in die Wege geleitet, wenn der Stützsattel 2 zwischen den auseinanderstehenden Spitzen 8 der Spreizfinger 7 hindurchgefahren ist.

Sollte die Haut nach dem beschriebenen Spreizvorgang nicht gerissen sein, so geschieht dies zwangsläufig anschließend während des Vorbeilaufs des Stützsattels 2 an den Spreizfingern 7 .

Ein als zweites Werkzeug 18 nachgeschalteter Enthäuter ist nunmehr in der Lage, die Haut vollständig und in einem Stück zu entfernen. Der Enthäuter kann entsprechend demjenigen aus der DE-PS 37 36 401 aufgebaut sein.

Bezugszeichenliste

| 1 | Förderer |
| 2 | Stützsattel |
| 3 | Sattelhorn |
| 4 | Geflügelkörper |
| 5 | Halsteil |
| 6 | erstes Werkzeug |
| 7 | Spreizfinger |
| 8 | Spitze |
| 9 | Achse |
| 10 | Feder |
| 11 | Tragelement |
| 12 | Achse |
| 13 | Schlitten |
| 14 | Feder |
| 15 | Stützrolle |
| 16 | Steuerkurve |
| 17 | Stützrolle |
| 18 | Feder |
| 19 | zweites Werkzeug |

## Patentansprüche

1. Verfahren zum Enthäuten von Geflügelkörpern, bei denen die Extremitäten entfernt sind, **dadurch gekennzeichnet**, daß zunächst die im Bereich des Rückens aufliegende Hautpartie der Hauthülle durch Unterfahren vom Kopfende her und im wesentlichen im Bereich der Symmetrieebene des Geflügelkörpers abgehoben wird, daß dann die Hauthülle durch Spannen und Überdehnen der so gelösten Hautpartie aufgetrennt wird und schließlich das Enthäuten in bekannter Weise durch Angriff von der Brustseite her erfolgt.

2. Verfahren nach Anspruch 1, **dadurch gekennzeichnet**, daß das Lösen der Hautpartie im Bereich des Rückens durch von der Symmetrieebene des Geflügelkörpers ausgehendes Abheben und das Auftrennen der Hauthülle durch Spannen und Überdehnen der gelösten Hautpartie erfolgt.

3. Vorrichtung zur Durchführung des Verfahrens nach Anspruch 1 oder 2, mit einem Förderer, der mit mindestens einem, ein Sattelhorn aufweisenden Stützsattel bestückt ist zum Fixieren des zu bearbeitenden Geflügelkörpers und zum Führen desselben mit dem Kopfende voraus durch den Wirkungsbereich von Werkzeugen, die symmetrisch zu der Mittenebene des Förderers und längs dessen Förderweg angeordnet sind, **dadurch gekennzeichnet**, daß

   - das erste Werkzeug (6) ein Paar Spreizfinger (7) mit gegen die Bewegungsrichtung des Förderers (1) gerichteten, an ihren freien Enden verrundeten Spitzen (8) umfaßt,

   - die Spreizfinger (7) in Grundstellung mit ihren Spitzen (8) unmittelbar neben der Mittenebene des Förderers (1) und unterhalb des Sattelhorns (3) angeordnet und pflugartig divergierend und, bezogen auf die Bahnebene des Förderers (1), mit dessen Bewegungsrichtung ansteigend ausgebildet sind, und

   - die Anordnung der Spreizfinger (7) so getroffen ist, daß sie mit ihren Spitzen (8) der Kontur des Stützsattels (2) bzw. der Rückenkontur des aufgesattelten Geflügelkörpers (4) folgend steuerbar sind.

4. Vorrichtung nach Anspruch 3, **dadurch gekennzeichnet**, daß die Steuerung der Spreizfinger (7) in Abhängigkeit von der jeweiligen Stellung des jeweils in den Arbeitsbereich der Spreizfinger (7) eintretenden Aufnahmesattels (2) erfolgt.

5. Vorrichtung nach Anspruch 3 oder 4, **dadurch gekennzeichnet**, daß den Spreizfingern (7) durch die Steuerung eine erste, zu der Symmetrieebene der Stützsättel (2) parallele Bewegungskomponente und eine zweite, den gegenseitigen Abstand der Spitzen (8) zueinander beeinflussende Bewegungskomponente mitgeteilt wird.

6. Vorrichtung nach Anspruch 5, **dadurch gekennzeichnet**, daß die Spreizfinger (7) in Richtung der ersten Bewegungskomponente federnd ausweichlich angeordnet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | EP-A-0 380 714 (BAADER)<br>* Spalte 4, Zeile 43 - Zeile 47; Anspruch 8 * * Spalte 6, Zeile 49 - Zeile 57 *<br>— — — | 1-3 | A 22 C 21/00 |
| D,A | EP-A-0 244 887 (STORK)<br>* Seite 3, Zeile 37 - Seite 4, Zeile 20 *<br>— — — | 1-3 | |
| D,A | DE-C-3 736 401 (BAADER)<br>* das ganze Dokument *<br>— — — | 1,3 | |
| D,A | NL-A-8 302 207 (STORK)<br>— — — | | |
| A | US-A-4 610 051 (MARTIN)<br>— — — | | |
| A | US-A-4 557 017 (GASBARRO)<br>— — — | | |
| A | WO-A-8 906 494 (SIMON-JOHNSON)<br>— — — — — | | |
| | | | **RECHERCHIERTE SACHGEBIETE (Int. Cl.5)**<br><br>A 22 C |

Der vorliegende Recherchenbericht wurde für alle Patentansprüche erstellt

| Recherchenort | Abschlußdatum der Recherche | Prüfer |
|---|---|---|
| Den Haag | 22 April 91 | DE LAMEILLIEURE D. |